# EUROPEAN PATENT APPLICATION

(11) **EP 2 256 628 A1**
(43) Date of publication of application: **01.12.2010**
(21) Application number: 10161970.8
(22) Date of filing: 05.05.2010
(51) Int. Cl.: G06F 9/48

(54) **Interrupt processing apparatus and method**

(30) Priority: 22.05.2009 JP 2009124161
(71) Applicant: Renesas Electronics Corporation, Nakahara-ku Kawasaki Kanagawa 211-8668 (JP)
(72) Inventor: Uno, Masayuki, Kanagawa 211-8668 (JP)
(74) Representative: Betten & Resch

(57) **Abstract**

An interrupt processing apparatus stores an elapsed detection time and an interrupt occurrence count for each interruption cause. The interrupt processing apparatus stores an interval of trouble determination for each interruption cause, and determines whether the elapsed detection time for each interruption cause reaches the interval of trouble determination. If the interrupt occurrence count exceeds the threshold value when the trouble determination interval is reached, the trouble state is determined.

## Description

### INCORPORATION BY REFERENCE

This application is based upon and claims the benefit of priority from Japanese patent application No. 2009-124161, filed on May 22, 2009, the disclosure of which is incorporated herein in its entirety by reference.

### BACKGROUND OF THE INVENTION

### 1. Field of the invention

The present invention relates to an interrupt processing apparatus, an interrupt processing method, and an information processing apparatus, and more particularly, to an interrupt processing apparatus, and interrupt processing method, and an information processing apparatus that receive various types of interrupt processes.

### 2. Description of Rented Art

Current information processing apparatuses such as an MPU (Micro Processing Unit) have a mechanism to receive interrupt processes from other peripheral devices or internal programs. An interrupt process is a process to interrupt a running process and execute another process. Examples of the interrupt process include an interrupt from hardware (e.g., keyboard, mouse, printer) and an interrupt from software (e.g., data overflow, divide by zero) during execution of a program.

Generally, an interrupt process has a higher priority than normal task processes. Accordingly, if an interrupt signal is frequently generated because of a hardware, trouble or the like, the current information processing apparatus is dedicated to the interrupt process, and cannot execute normal tasks suitably. As a result, the current information processing apparatus may fall into a response disable state. To resolve this problem, the current information processing apparatus requires a mechanism to monitor interruption conditions and detects interruption troubles. Especially, a system that processes many types of interruptions, such as an MPU is required to detect interruption troubles white taking interruption causes into consideration.

Sakata (Japanese Unexamined Patent Application Publication No.01-258162) discloses an information processing apparatus detects an interrupt occurrence count periodically for each of multiple channels, and determines the interrupt count detected for each channel. If the count related with a channel exceeds a predetermined value, the information processing apparatus determines that the channel is in a trouble state, and stops the interrupt, processing for the channel for a certain, period of time. As mentioned above, even when any of die channels is in the trouble state, the information processing apparatus stops the interrupt processing for the troubled channel only. Therefore, the processing for other channels are less affected by the troubled channel.

### SUMMARY

The present inventor has found a problem as described below. The information processing apparatus disclosed by SAKAIA assumes that there are multiple interruption causes. However, in the information processing apparatus, me interval of detecting the occurrence of an interruption trouble is constant regardless of the types of interruption causes. Tins makes it difficult for the information processing apparatus to monitor conditions according to the characteristics of multiple interruption causes having different occurrence frequencies. Accordingly, there is a possibility that the information processing apparatus disclosed by Sakata cannot detect an interruption trouble successfully, or may detect an interruption trouble falsely.

A first exemplary aspect of the present invention is an interrupt processing apparatus including an interrupt detection unit that detects an interrupt occurrence status for each of a plurality of interrupt types at a detection interval set for each of the plurality of interrupt types.

The interrupt processing apparatus according to the first exemplary aspect of the invention stores an elapsed time corresponding to an interruption cause and an interrupt occurrence status for each interruption cause. Also, the interrupt processing apparatus stores an interval of detecting an interruption trouble for each interrupt type. The Interrupt processing apparatus detects a trouble status for each interrupt type at predetermined trouble determination intervals. Therefore, the interrupt processing apparatus achieves appropriate trouble detection according to the characteristics of each type of interruption causes.

### BRIEF DESCRIPTION OF THE DRAWINGS

The above and other objects, advantages and features of the present invention will be more apparent from the following description of certain preferred embodiments taken in conjunction with the accompanying drawings, in which:
Fig. 1 is a block diagram showing an exemplary configuration of an interrupt processing apparatus according to a first exemplary embodiment of the present invention;
Fig. 2 is a block diagram showing another exemplary configuration of the interrupt processing apparatus according to the a first exemplary embodiment of the present invention;
Fig. 3 is a sequence chart showing a process of an interrupt processing apparatus when an interrupt request occurs according to the first exemplary embodiment of the present invention:
Fig. 4 is a table storing interrupt counts corresponding to interruption causes according to the first exemplary embodiment of the present invention;
Fig. 5 is a table storing threshold values of interruption counts for use in interrupt determination according to the first exemplary embodiment of the present invention;
Fig. 6 is a flowchart of an abnormality determination process when a notification is sent from a timer according to first and second exemplary embodiments of the present invention;
Fig. 7 is a flowchart showing a trouble determination process carried out when a notification is sent from the timer according to the first exemplary embodiment of the present invention;
Fig. 8 is a table storing threshold values of interruption counts for use in interrupt determination according to a second exemplary embodiment of the present invention; and
Fig. 9 is a flowchart showing a trouble determination process carried out when a notification is sent from a timer according to the second exemplary embodiment of the present invention.

### DETAILED DESCRIPTION OF THE EXEMPLARY EMBODIMENTS

### [First exemplary embodiment]

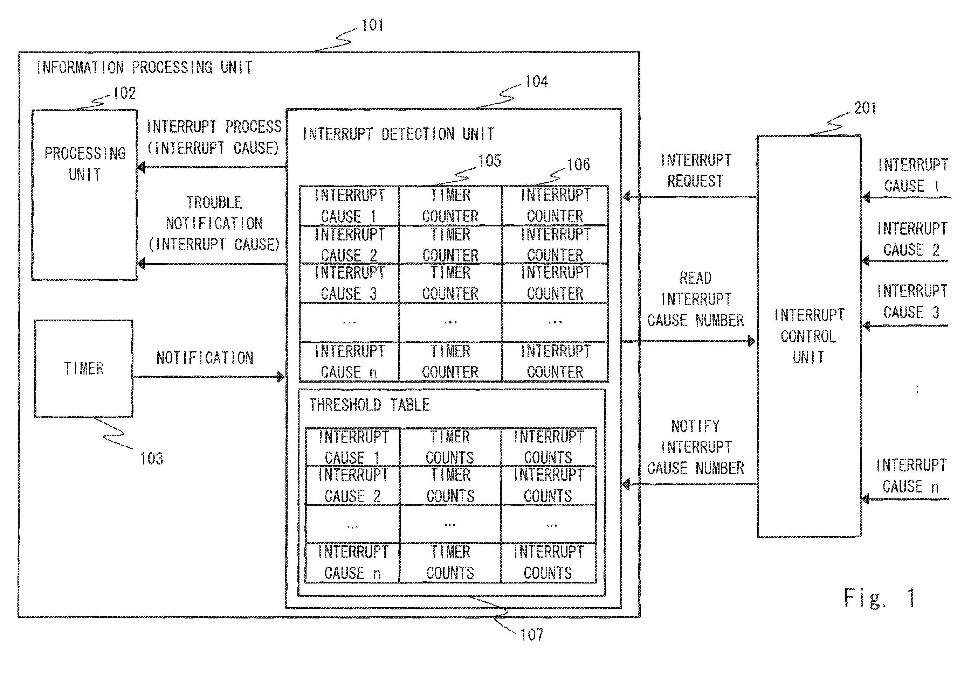

Exemplary embodiments for carrying out the present invention are explained hereinafter with reference to the drawings. Fig. 1 is a block diagram of an interrupt processing apparatus according to a first exemplary embodiment of the present invention. Referring to Fig. 1, the interrupt processing apparatus includes an information processing unit 101 and an interrupt control unit 201. The information processing unit 101 includes a processing unit 102, a timer 103, an interrupt detection unit 104, a timer counter 105, an interrupt counter 106, and a threshold table 107.

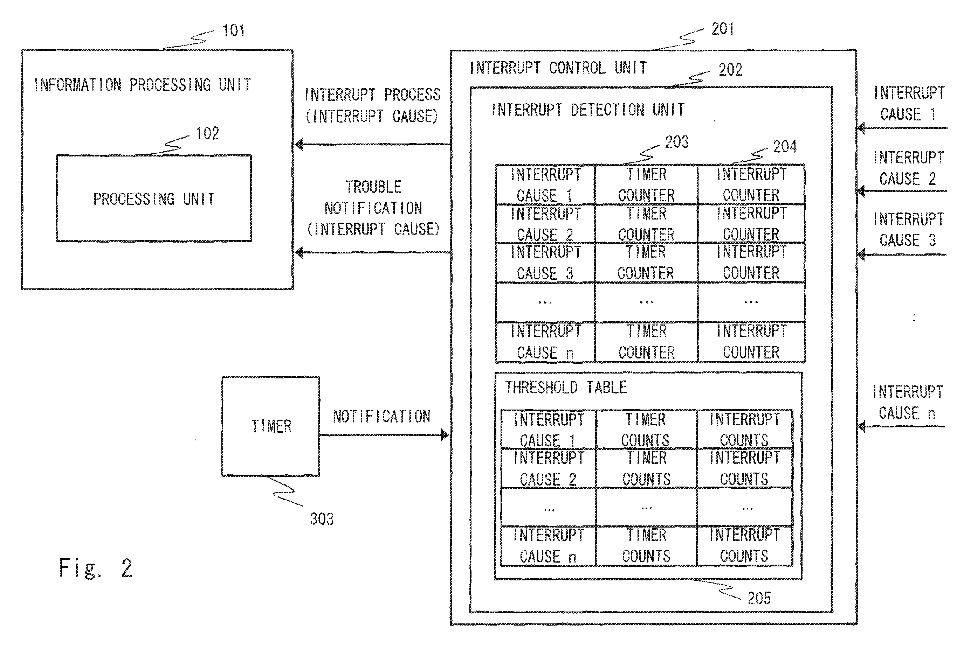

In this exemplary embodiment, the configuration of the interrupt processing apparatus is not limited to that shown in Fig. 1. For example, the information processing unit 101, the timer 103, and the interrupt detection unit 104 may be arranged separately as shown in Fig. 2. Further, in the configuration of Fig. 1, the interrupt control unit 201 may be included in the information processing unit 101.

The processing unit 102 reads a program stored in a memory like a DRAM (Dynamic Random Access Memory). According to an instruction from the program, the processing unit 102 receives data from other sources like an input device. The processing unit 102 processes and operates the data, and outputs the data to output devices. The timer 103 sends a notification to the interrupt detection unit 104 at regular intervals.

The interrupt detection unit 104 receives an interrupt request from the interrupt control unit 201. After that, the interrupt detection unit 104 reads an interruption cause number corresponding to the received interrupt request. The interrupt detection unit 104 receives the notification from the timer 103. The interrupt detection unit 104 sends an interrupt trouble notification and an interrupt notification to the processing unit 102. The interrupt detection unit 104 includes the timer counter 105, the interruption counter 106, and the threshold table 107 storing data for each interruption cause. The threshold table 107 is not necessarily included in the interrupt detection unit 104, and the interrupt detection unit 104 may refer to the threshold table 107 as needed.

The timer counter 105 has an elapsed time of interrupt detection corresponding to each interruption cause. The interruption counter 106 has an interrupt occurrence count corresponding to each interruption cause. The threshold table 107 has a trouble detection interval corresponding to each interruption cause. The threshold table 107 also has threshold values that are interruption counts for determining an interruption trouble.

The interrupt control unit 201 sends an interruption request to the interrupt detection unit 104. Further, the interrupt control unit 201 notifies an interruption cause in response to a request for reading the interruption cause number, from the interrupt detection unit 104. Examples of the interruption request include interrupt requests from a timer, a keyboard, a mouse, a printer, a DVD multi drive, and a power source.

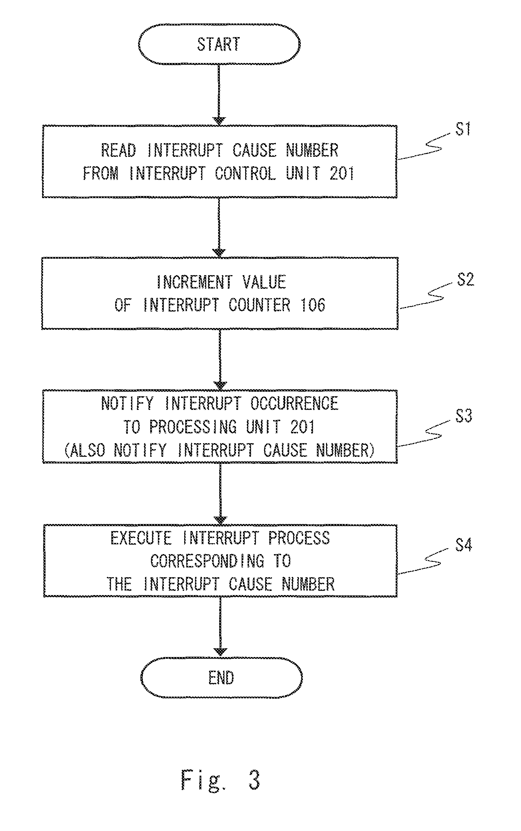

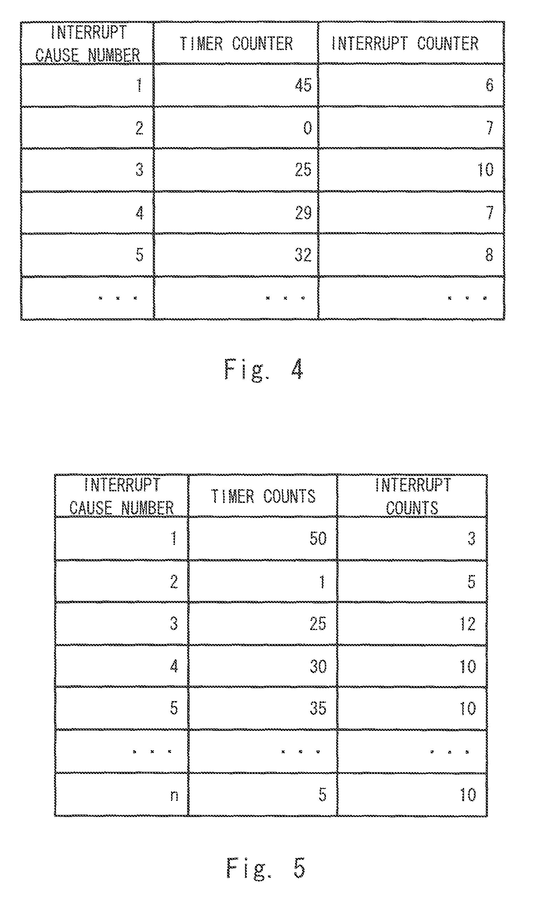

Referring next to the flowchart of Fig. 3 and the interruption count table of Fig. 4, a description is given of a process carried out by the interrupt detection unit 104, when the interrupt control unit 201 notifies an interrupt request corresponding to any interruption cause to the information processing unit 101. Fig. 3 shows a flowchart of a process carried out by the interrupt detection unit 104 when the interrupt control unit 201 notifies an interruption request. Fig. 4 shows an exemplary interruption count table which includes the table including the timer counter 105 and the interruption counter 106 for each interruption cause. In this exemplary embodiment, a description is given of a process carried out when the interrupt control unit 201 notifies an interrupt request corresponding to "interruption cause 1" to the information processing unit 101.

At first, the interrupt detection unit 104 reads an interruption cause number from the interrupt control unit 201 (S1). The interrupt detection unit 104 increments the value of interruption counter 106 corresponding to the read interruption cause number (S2). For example, the interrupt detection unit 104 reads the interruption cause number "interruption cause 1" from the interrupt control unit 201, and the interrupt detection unit 104 increments the value "6" of the interruption counter 106 corresponding to "interruption cause 1"to "7".

Next, the interrupt detection unit 104 notifies an interrupt process as well as the interruption cause number to the processing unit 1 02 (S3). For example, the interrupt detection unit 104 notifies the interrupt process corresponding to "interruption cause 1" to the processing unit 102.

After the notification of the interrupt process, the processing unit 102 executes the interrupt process corresponding to the interruption cause number(S4). For example, the processing unit 102 executes the interruption process corresponding to "interruption cause number 1".

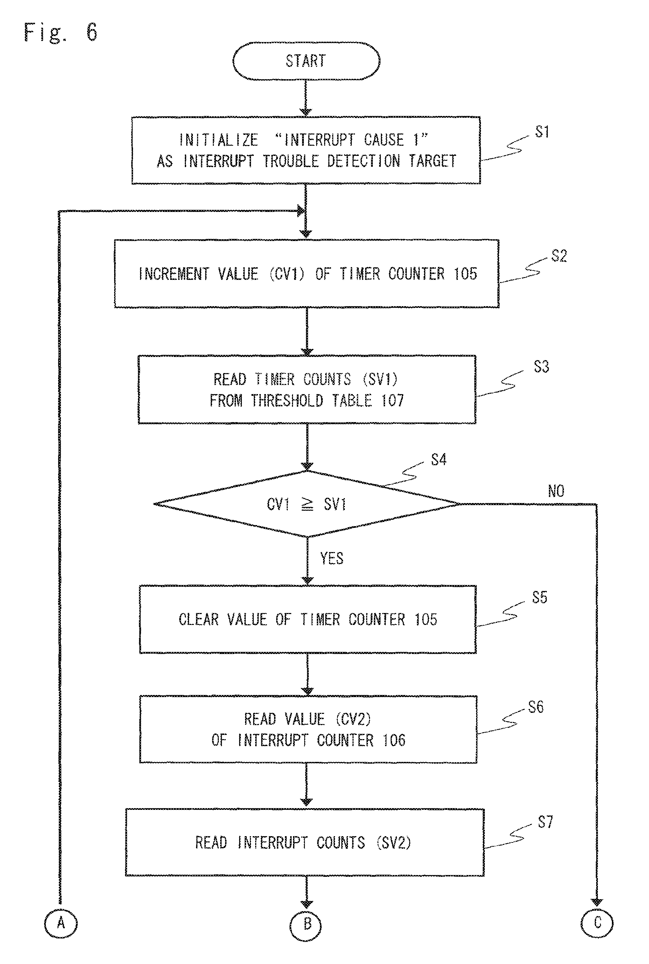

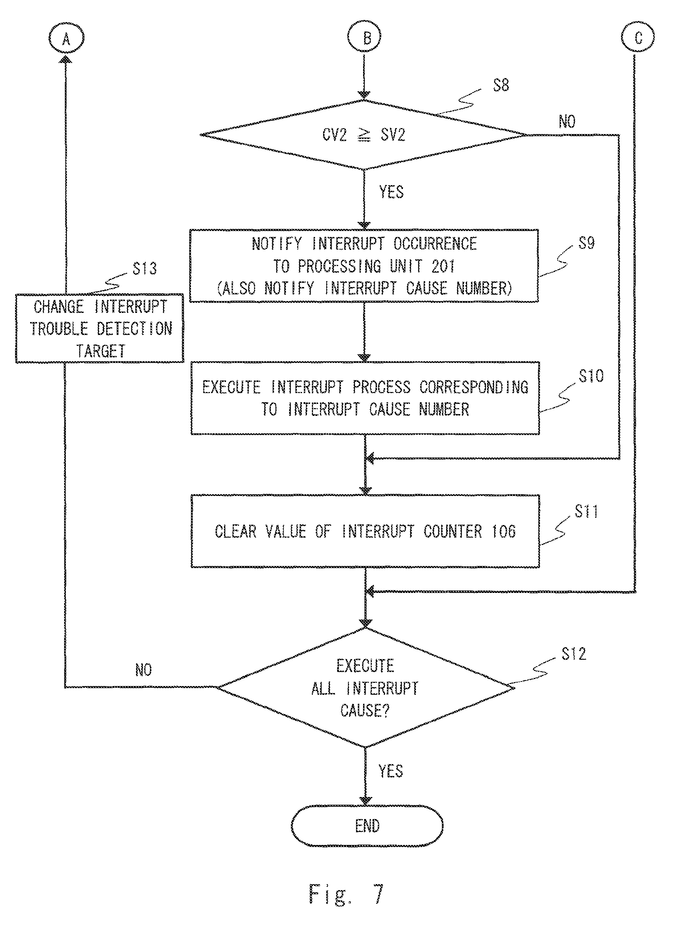

Referring now to the count table of Fig. 4, the threshold table 107 of Fig. 5, and the flowchart of Figs. 6 and 7, a description is given of a process carried out when the interrupt detection unit 104 receives a notification from the timer 103. The threshold table 107 (Fig. 5) has columns, timer counts each showing an interval to detect interruption troubles, and interruption counts each showing a threshold value to detect interruption troubles, for each interruption cause. The information processing unit 101 sets the data of the threshold table 107 according to the characters of the information processing unit 101 and the characters of each interruption cause. The data of the threshold table 107 can be changed by a user as needed after the activation of information processing apparatus. Figs. 6 and 7 each show the flowchart of the processing carried out by the interrupt detection unit 104 when the interrupt detection unit 104 receives a notification from the timer 103.

The interrupt detection unit 104 initializes "interruption cause 1" as an interruption trouble detection target (S1). This process (S1) is executed for detecting interruption troubles for all interruption causes. The interrupt detection unit 104 increments the value(CV1) of the timer counter 105 corresponding to the interruption trouble detection target (S2). For example, the interrupt detection unit 104 increments the value "45" of the timer counter 105, which corresponds to "interruption cause 1", to "46". The value of the timer counter 105 represents an elapsed time for detecting troubles, and the value may represent any measure of time.

The interrupt detection unit 104 reads the value of the timer count corresponding to the interruption cause number (SV1) from the threshold table 107 (S3). For example, the interrupt detection unit 104 reads the timer count "50" corresponding to "interruption cause 1" from the threshold table 107. While in this exemplary embodiment, the processing(S3) of reading the value (SV1) of the timer count from the threshold table 107 is executed after the processing (S2) of incrementing the value of the timer counter 105, the processing order is not limited thereto. The processing of S2 may be executed after the processing of S3. Alternatively, the processing of S2 and S3 may be executed simultaneously,

The interrupt detection unit 104 compares the value(CV1) of the timer counter 105 corresponding to the interruption cause, with the read value(SV1) of the timer count(S4). If the value (CV1) of the timer counter 105 is more than or equal to the read value (SV1) of the timer counter, the interrupt detection unit 104 executes the trouble detection process (S5-S11). If the value(CV1) of the timer counter 105 is less than the read value(SV1) of the timer counter, the interrupt detection unit 104 does not execute the trouble detection process(S5-S11), and the flow shifts to processing for the next interruption cause(S12). For example, the interrupt detection unit 104 compares the value (CV2) "46" of the timer counter 105 corresponding to "interruption cause 1 '"with the value(SV1) "50" of the timer count read from the threshold table 107. In this case, since the value (CV1) of the timer counter 105 is less than the timer count (SV1), the flow shifts to processing for "interruption cause 2", which is the next interruption cause, without execution of the trouble detection process(S5-S11). During the process for "interruption cause 2" in the interrupt detection unit 104, the value (CV1) of the timer counter 105 is incremented from "0" to "1"(S2). After that, the value (CV1) "1" becomes equal to or more than "1" (timer count(SV1) of the threshold table 107), and the interruption detection process (S5-S11) is executed.

The interrupt detection unit 104 clears the value of the timer counter 105 corresponding to the interruption cause number(S5). In this case, the interrupt detection unit 104 sets the value "0" of the timer counter 105 corresponding to "interruption cause 2".

The interrupt detection unit 104 reads the value (CV2) of the interruption counter 106 corresponding to the interruption cause number(S6). For example, the interrupt detection unit 104 reads "7" as the value (CV2) of interruption counter 106 corresponding to "interruption cause 2".

The interrupt detection unit 104 also reads the interruption count (SV2) corresponding to the interruption cause number from the threshold table 107(S7). In this case, the interrupt detection unit 104 reads "5" as the value (SV2) of the interruption count corresponding to the interruption cause number "interruption cause 2" from the threshold table 107. In this embodiment, the processing(S6) of reading the value of the value of the interrupt counter 106 and the processing(S7) of reading the interruption count from the threshold table 107 are executed after the processing(S5) of clearing the value of the timer counter 105, but the processing order is not limited thereto. The processing order may be changed, and the processings may be executed simultaneously.

After that, the interrupt detection unit 104 compares the value(CV2), which has been read in S6, of the interruption counter 106 with the interruption count(SV2) read in S7(S8). If the value(SV2) of interruption counter is more than or equal to the value(CV2) of the interruption counter 106, the interrupt detection unit 104 determines that the interrupt occurs due to a trouble status, and the process (S9, S10) corresponding to the trouble status. If the value (SV2) of interruption counts is less than the value (CV2) of the interruption counter 106, the interrupt detection unit 104 determines that the interruption cause is a trouble status. In this case, the value(SV2) of the interruption counter corresponding to "interruption cause 2" is "7" which is more than the value(CV2) "5", Accordingly, the interrupt detection unit 104 determines that "interruption cause 2" corresponds to the trouble status.

If the interrupt detection unit 104 determines that a certain interruption cause is the trouble status in trouble determination processing of S8, the interrupt detection unit 104 notifies the processing unit 102 that the interruption cause is the trouble status(S9). After that, the processing unit 102 executes a process for dealing with the trouble status corresponding to the interruption cause number(S10). In this case, the interrupt detection unit 104 notifies the processing unit 102 that "interruption cause 2" is the trouble status. Upon receiving the notification that "interruption cause 2" is the trouble status, the processing unit 102 executes an appropriate process for dealing with the trouble status corresponding to "interruption cause 2".

The process(S9, S10) for dealing with the trouble status is not necessarily executed by the processing unit 102 when the interrupt detection unit 104 detects a trouble. The information processing unit 101 may take some measures for the process. For example, the interrupt detection unit 104 requests the interrupt control unit 201 to stop receiving any interruption requests corresponding to the interruption cause, which is determined as a trouble, for a given period of time.

The interrupt detection unit 104 clears the value of the interruption counter 106 corresponding to the interruption cause for which the trouble determination process is executed(S11). In this case, the interrupt detection unit 104 clears the value of the interruption counter 106 corresponding to "interruption cause 2".

The information processing unit 101 repeats the series of processes(S2-S11) for each interruption cause, and detects the trouble status for each interruption cause(S12). If the trouble detection process for all the interruption, causes is finished, the information processing unit 101 completes all the processes (S 12).

In this exemplary embodiment, the information processing unit 101 detects a trouble status for each interruption cause upon every reception of a notification from the timer 103. Another method in which the interrupt detection unit 104 detects a trouble status for each interrupt request from the interrupt control unit 201 can also provide the equivalent effect. An overview of the process will be described below.

The interrupt detection unit 104 receiving a notification from the timer 103 increments the value for the timer counter 105 of each interruption cause(the process corresponding to S2). If the value of the timer counter 105 for each interruption cause equals the value(SV1) of the timer count, the interrupt detection unit 104 clears the value of the timer counter 105 and the value of the interrupt counter 106 for the interruption cause(the process corresponding to S5, S11).

When the interrupt control unit 201 notifies an interrupt request corresponding to a certain interruption cause to the interrupt detection unit 104, the interrupt detection unit 104 increments the value of the interrupt counter 106 corresponding to the interruption cause. After that, the interrupt detection unit 104 compares the value(CV2) of the interrupt counter 106 corresponding to the interruption cause with the interruption count(SV2) in the threshold table 107, and detects a trouble status for the interruption cause.

While in this exemplary embodiment, the trouble status is detected for each interruption cause, the trouble detection process may be carried out in combination with a trouble detection process using the interrupt counts of the interrupt processing apparatus for each timer cycle.

As described so far, the interrupt processing apparatus according to the first exemplary embodiment has a timer counter to show an elapsed time, and a timer count to show a time interval to detect a trouble for each interruption cause. Further, the interrupt processing apparatus detects a trouble status for each interruption cause using the values of the timer counter and the timer count. Therefore, the interruption processing apparatus can detect a trouble status at an appropriate interrupt detection interval for each interruption cause. In addition, the interrupt processing apparatus according to the first exemplary embodiment achieves appropriate trouble status detection for each interruption cause because of the threshold interruption counts of each interruption cause. Furthermore, the interrupt processing apparatus achieves interruption detection with a small amount of resource, because the interruption detection is feasible in a single interrupt processing apparatus.

### [Second exemplary embodiment]

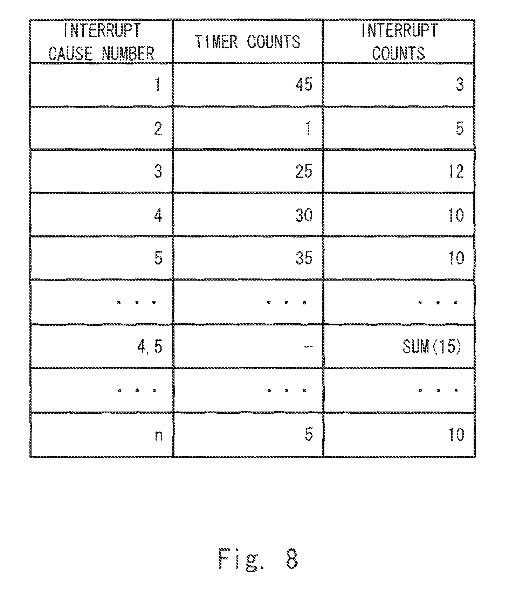

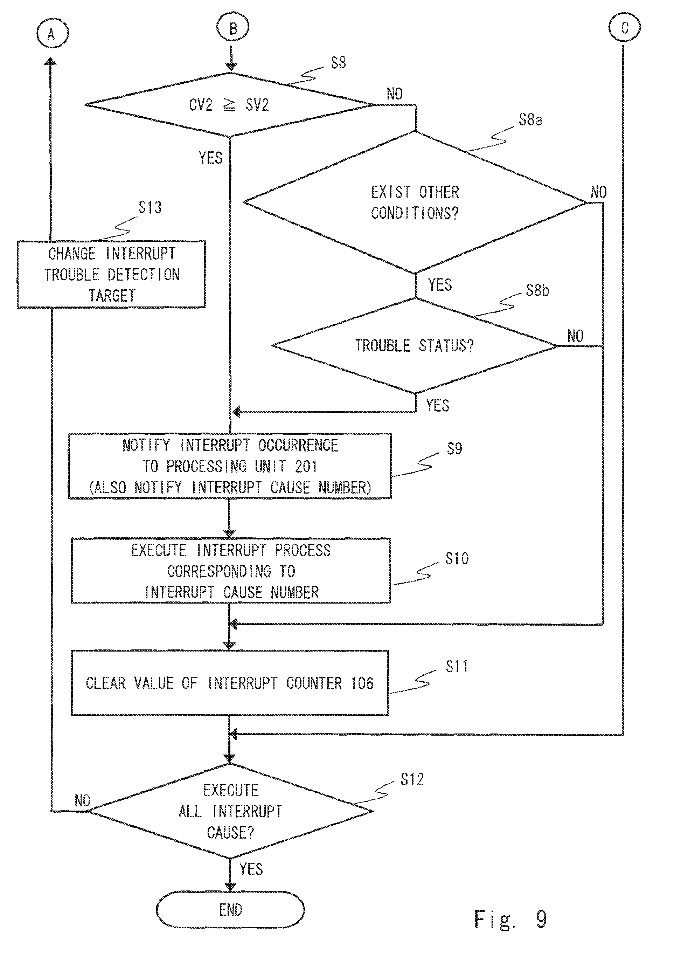

Referring to Figs. 4 and Figs. 6 to 9, a second exemplary embodiment of the present invention will be described. The threshold table 107 has threshold values of each interruption cause, and threshold values relating to multiple interruption causes.

As with the first exemplary embodiment, the interrupt detection unit 104 detects a trouble status for each interruption cause(S2-S8). In this exemplary embodiment, it is assumed that the interrupt detection unit 104 executes a trouble detection process for "interruption cause 4". The value of the timer counter 105 corresponding to "interruption cause 4" is incremented (S2) to the value "30". Because the value of the timer count acquired from the threshold table 107 is also "30", the processes of S5-S8 are executed. The value "7" of the interruption counter 106 corresponding to "interruption cause 4" is less than the value "10" of the interruption count in the threshold table 107. Accordingly, the interrupt detection unit 104 executes the next process(S8a) without determining "interruption cause 4" as a trouble status.

The interrupt detection unit 104 checks whether there are any other determination conditions relating to the interruption cause for which the trouble detection process is being executed(S8a). For example, the checking as to whether other determination conditions exist is performed by searching determination conditions including the interruption cause for which the trouble detection process is being executed. If other determination conditions exist, the interrupt detection unit 104 executes the determination about the conditions (S8b). In this case, there is a determination condition (sum(15)) that a threshold value of the sum of the interruption cause 4 and an interruption cause 5 is "15", the interrupt detection unit 104 executes the interrupt detection for the determination. The sum of the values of the interrupt counter 106 corresponding to the interruption cause 4 and the interruption cause 5 is more than or equals to "15". Accordingly, the interrupt detection unit determines the trouble status.

If the interrupt detection unit 104 determines the trouble status in S8a or S8b, the process (S9, S10) for dealing with the trouble status is executed in a similar manner as in the first exemplary embodiment by the information processing unit 101, and the interrupt detection unit 104 clears the value of the interruption counter 106 corresponding to the interruption cause(S11). In this case, the interrupt detection unit 104 notifies the processing unit 102 that the trouble is due to the combination of the interruption causes 4 and 5. The processing unit 102 executes a process for dealing with the trouble status in response to a trouble notification. Then, the interrupt detection unit 104 clears the value of the interruption counter 106 corresponding to "interruption cause 4".

Note that in the above exemplary embodiments of the present invention, the interrupt processing apparatus can detect a trouble status for each interruption cause and for multiple interruption causes. While in this exemplary embodiment, the threshold table 107 has the threshold value for each interruption cause as well as threshold values relating to multiple interruption causes, the present invention is not limited thereto. For example, the threshold table 107 may have any threshold value. As with the first exemplary embodiment, it is also possible to employ a method in which the interrupt detection unit 104 detects only a trouble status for an interruption cause corresponding to an interrupt request, upon every reception of an interrupt request from the interrupt control unit 201.

The present invention is not limited to the above exemplary embodiments, and can be modified in various ways without departing from the scope of the present invention. For example, data indicating an increasing rate of interruption counts for the same interruption cause is adaptable to the threshold value, instead of an integer indicating the interruption count. Further, instead of the trouble determination using threshold values, any determination process may be executed at detection intervals corresponding to the interruption cause. The interrupt processing apparatus of the present invention is applicable not only to hardware interruption but also to software interruption such as divide by zero, page fault, and overflow. Moreover, the interrupt processing apparatus of the present invention is applicable to interrupt trouble detection corresponding to both the hardware interruption and the software interruption.

The first and second exemplary embodiments can be combined as desirable, by one of ordinary skill in the art.

While the invention has been described in terms of several exemplary embodiments, those skilled in the art will recognize that the invention can be practiced with various modifications within the spirit and scope of the appended claims and the invention is not limited to the examples described above.

Further, the scope of the claims is not limited by the exemplary embodiments described above.

Furthermore, it is noted that, Applicant's intent is to encompass equivalents of all claim elements, even if amended later during prosecution.

According to an embodiment an interrupt processing apparatus stores an elapsed detection time and an interrupt occurrence count for each interruption cause. The interrupt processing apparatus stores an interval of trouble determination for each interruption cause, and determines whether the elapsed detection time for each interruption cause reaches the interval of trouble determination. If the interrupt occurrence count exceeds the threshold value, when the trouble determination interval is reached, the trouble state is determined.

## Claims

1. . A interrupt processing apparatus comprising:
An interrupt detection unit that detects interrupt occurrence status for each of a plurality of interrupt types at a detection interval set for each of the plurality of interrupt types.

2. . The interrupt processing apparatus according to Claim 1, wherein the interrupt detection unit detects the interrupt occurrence status by comprising a threshold value set for each of the interrupt types with an interrupt occurrence count for each of the interrupt types.

3. . The interrupt, processing apparatus according to Claim 1 or 2, further comprising:
a timer that issues a notification at regular intervals; and
a timer counter stores a count of the notification from the timer for each of the plurality of interrupt types;
wherein the interrupt detection unit determines the interrupt occurrence status by comparing the threshold value associated with each of the interrupt types with the interrupt occurrence count, when the counter timer reaches the detection interval.

4. . The interrupt processing apparatus according to one of claims 1 to 3, wherein at least one of the plurality of interrupt types is related to a plurality of interruption causes.

5. . An interrupt processing method comprising;
detecting an interrupt occurrence status for each of a plurality of interrupt type set a detection interval set for each of the plurality of interrupt types.

6. . The interrupt processing method according to Claim 5, wherein the detecting the interrupt occurrence status includes determining the interrupt occurrence status by comprising a threshold value set for each of the interrupt types with an interrupt occurrence count for each of the interrupt types.

7. . The interrupt processing method according to Claim 5 or 6, further comprising; issuing a notification at regular intervals; and storing a count of the notification for each of the plurality of interrupt types;
wherein the detecting the interrupt occurrence status includes determining the interrupt occurrence state by comparing the threshold value associated each of the interrupt types with the interrupt occurrence count, when the stored count of the notification reaches me detection interval.

8. . The interrupt processing method according to one of claims 5 to 7, wherein at least one of the plurality of interrupt types is related to a plurality of interruption causes.

9. . An information processing apparatus comprising:
an interrupt detection unit that detects an interrupt occurrence status for each of the plurality of interrupt types at an interval set for each of the plurality of interrupt types; and
a processing unit that receives an interrupt request from the interrupt detection unit, and executes processing corresponding to the interrupt request.

10. . The information processing apparatus according to Claim 9, wherein the interrupt detection unit determines the interrupt occurrence status by comparing a threshold value set for each of the interrupt types and the interrupt, occurrence count.

11. . The information processing apparatus according to Claim 9 or 10. further comprising:
a timer that issues a notification at regular intervals; and
a timer counter that stores a count of the notification from the timer for each of the plurality of interrupt types,
wherein the interrupt detection unit determines the interrupt occurrence state by comparing the threshold value associated with each of the interrupt types with the interrupt occurrence count, when the timer counter reaches the detection interval.

12. . The information processing apparatus according to one of claims 9 to 11, wherein at least one of the plurality of interrupt types is related to a plurality of interruption causes.
